# EUROPÄISCHE PATENTSCHRIFT

(11) **EP 1 930 086 B1**
(45) Veröffentlichungstag und Bekanntmachung des Hinweises auf die Patenterteilung: **11.01.2012**
(21) Anmeldenummer: 07022826.7
(22) Anmeldetag: 24.11.2007
(51) Int. Cl.: B05B 15/12

(54) **Pulverbeschichtungskabine für eine Pulverbeschichtungsanlage**
Powder coating booth for a powder coating facility
Cabine de revêtement par poudre pour une installation de revêtement par poudre

(30) Priorität: 07.12.2006 DE 102006057696
(43) Veröffentlichungstag der Anmeldung: 11.06.2008
(73) Patentinhaber: Eisenmann AG, 71032 Böblingen (DE)
(72) Erfinder: Bezner, Wolfgang, 71101 Schönaich (DE); Pfau, Jörg, 70563 Stuttgart (DE); Strasser, Norbert, 71391 Gechingen (DE); Rudolf, Joachim, 71101 Schönaich (DE)
(74) Vertreter: Ostertag, Ulrich

(56) Entgegenhaltungen:
- EP-A- 1 466 670
- WO-A-02/078858
- WO-A-2005/068082
- DE-A1- 4 413 347
- DE-A1- 10 350 332
- DE-A1- 19 522 186
- US-A- 4 715 314

## Beschreibung

Die Erfindung betrifft eine Pulverbeschichtungskabine für eine Pulverbeschichtungsanlage mit einem horizontal oder geneigt angeordneten ebenen Bodenabschnitt und einer Abblasdüse zum Abblasen von Pulver, das sich auf dem Bodenabschnitt abgesetzt hat, wobei die Abblasdüse verfahrbar angeordnet und zumindest über einen Teil des möglichen Verfahrwegeshinweg aus einen Schlitz herausragt.

Eine derartige Pulverbeschichtungskabine ist aus der WO 02/078858 A1 bekannt.

Bei der elektrostatischen Pulverbeschichtung von Gegenständen wird Pulver von einer Pulversprüheinrichtung auf die zu beschichtenden Gegenstände aufgesprüht. Der Beschichtungsvorgang findet in einer Pulverbeschichtungskabine statt, in welche die Gegenstände mit Hilfe eines Fördersystems eingebracht und nach der Beschichtung wieder ausgebracht werden.

Beim Beschichtungsvorgang bleiben nicht alle von der Pulversprüheinrichtung versprühten Pulverpartikel auf dem zu beschichtenden Gegenstand haften. Das überschüssige Pulver, das auch als Overspray bezeichnet wird, setzt sich an der Innenverkleidung, und zwar insbesondere auf dem Boden, der Pulverbeschichtungskabine ab und muß aus dieser entfernt werden. Die Notwendigkeit zum Entfernen des überschüssigen Pulvers besteht zum einen deswegen, weil bei einer sich in der Kabine ausbildenden Pulverstaubwolke Explosionsgefahr besteht, wenn eine bestimmte Pulverkonzentration überschritten wird. Ein anderer Grund für die Entfernung des überschüssigen Pulvers liegt darin, daß auf diese Weise die bei einem Farbwechsel erforderlichen Reinigungsmaßnahmen erheblich weniger Zeit in Anspruch nehmen.

Zum Entfernen von überschüssigem Pulver ist es bekannt, einen oder mehrere Absaugkanäle unterhalb oder in der Nähe des Bodens der Pulverbeschichtungskabine vorzusehen. Über meist schlitzförmige Absaugöffnungen, die sich entlang der Längsrichtung der Pulverbeschichtungskabine erstrecken und an die Absaugkanäle angrenzen, wird überschüssiges Pulver aus dem Bodenbereich abgesaugt.

Am günstigsten liegen die Verhältnisse, wenn die Bodenflächen relativ stark geneigt sind, weil dann zumindest ein Teil des überschüssigen Pulvers infolge der Schwerkraft nach unten in eine Rinne o.ä. rutscht, von der aus das Pulver problemlos abgesaugt werden kann.

Schwieriger sind die Verhältnisse, wenn auch horizontale oder nur leicht geneigte Bodenabschnitte vorgesehen sind. Solche Bodenabschnitte sind u.a. dann erforderlich, wenn die Pulverbeschichtungskabine begehbar sein soll. Eine Begehbarkeit ist nicht nur dann zweckmäßig, wenn die Pulversprüheinrichtungen von Hand geführt werden, sondern erleichtert auch die Reinigung und Wartung der Pulverbeschichtungskabine. Auf horizontalen Bodenabschnitten kann herabgefallenes Pulver jedoch nicht infolge der Schwerkraft herabrutschen und sich an einem Ort sammeln, von dem aus es leicht abgesaugt werden kann. Deswegen muß das herabgefallene Pulver mit relativ hoher Saugleistung von den horizontalen Bodenabschnitten abgesaugt werden.

Um nicht zu hohe Absaugleistung zu benötigen, schlägt die EP 1 125 639 B1 vor, einen sich in Längsrichtung der Pulverbeschichtungskabine erstreckenden horizontalen Bodenabschnitt möglichst schmal zu halten. Der horizontale Bodenabschnitt ist entlang seiner Längsseiten von Abrutschblechen begrenzt, die etwa einen Winkel von 45° zur Horizontalen einschließen. An die Abrutschflächen schließen sich nach oben hin vertikale Seitenwände der Pulverbeschichtungskabine an. Unterhalb eines jeden Abrutschblechs verläuft jeweils ein Absaugkanal, um das herabgefallene Pulver abzusaugen.

Aus der DE 103 50 332 A1 ist eine Pulverbeschichtungskabine bekannt, bei der ein Absaugkanal unter dem Boden der Pulverbeschichtungskabine verläuft. Der Boden wird dabei durch parallel zueinander angeordnete Klappen gebildet, die um zur Längsachse der Pulverbeschichtungskabine parallele Drehachsen verdrehbar sind. Die Längskanten der Klappen begrenzen Absaugschlitze, durch die hindurch herabgefallenes Pulver abgesaugt wird.

Um herabgefallenes Pulver möglichst vollständig zu entfernen, wurde vorgeschlagen, zusätzlich zu den Absaugschlitzen Abblaseinrichtungen vorzusehen, welche einen Luftstrom derart auf horizontale oder auch geneigte Bodenabschnitte richten, daß sich darauf ablagerndes Pulver in Richtung der Absaugschlitze geblasen wird.

Abblaseinrichtungen dieser Art sind z.B. aus der EP 1 466 670 A2 bekannt. Die dort beschriebene Pulverbeschichtungskabine hat einen ähnlichen Aufbau wie die Pulverbeschichtungskabine, die aus der oben erwähnten EP 1 125 639 B1 bekannt ist. Zusätzlich sind dort jedoch erste Luftblasleisten unmittelbar oberhalb von geneigten Abrutschblechen angeordnet. Diese ersten Luftblasleisten blasen Pulver, das auf die Abrutschbleche herabgefallen ist, auf den horizontalen Bodenabschnitt, der von den beiden Abrutschblechen eingefaßt wird. In der Mitte des horizontalen Bodenabschnitts erstrecken sich zweite Luftblasleisten, die auf den Bodenabschnitt herabgefallenes Pulver zu seitlichen, an Absaugkanäle angrenzende Absaugschlitze blasen.

Eine aus der DE 10 2004 059 602 A1 bekannte Pulverbeschichtungskabine hat einen ähnlichen Aufbau wie die Pulverbeschichtungskabine, die aus der EP 1 125 639 B1 bekannt ist. Der mittlere Teil des horizontalen Bodenabschnitts ist dort jedoch nicht umklappbar. Statt dessen befinden sich dort Abblasdüsen, um auf diesen Teil herabgefallenes Pulver zu Absaugschlitzen zu blasen.

Die vorstehend erläuterten Ansätze, bei denen Abblasdüsen herabgefallenes Pulver in Richtung eines Absaugschlitzes blasen, sind jedoch in mancher Hinsicht nachteilig. Um herabgefallenes Pulver möglichst vollständig zu entfernen, muß die Luft aus den Abblasdüsen unter sehr hohem Druck ausströmen. Ferner ist wegen ihrer begrenzten Reichweite eine große Zahl von Abblasdüsen notwendig, damit alle Flächen, auf denen sich Pulver abgesetzt hat, vollständig vom Pulver befreit werden.

Aus der eingangs bereits genannten WO 02/078858 A1 ist eine Pulverbeschichtungskabine bekannt, bei der zum Abblasen von Pulver, das an den Seitenwänden eines Sammeltrichters haften geblieben ist, eine Blaseinrichtung mit einer verfahrbaren Abblasdüse eingesetzt wird. Die Blaseinrichtung umfasst hierzu ein vertikal verlaufendes Rohr, das sich in vertikaler Richtung verschieben und um seine Längsachse drehen lässt. Am unteren Ende des Rohrs ist ein Blasarm gelenkig befestigt. Dieser kann so verschwenkt werden, dass er in der einen Endposition praktisch eine koaxiale Fortsetzung des Rohrs darstellt und in der anderen Endposition mit diesem einen rechten Winkel einschließt.

Aufgabe der Erfindung ist es, eine Pulverbeschichtungskabine anzugeben, bei der mit einfachen Mitteln eine sehr gründliche Entfernung von Pulver möglich ist, das sich auf einem horizontalen oder geneigt angeordneten ebenen Bodenabschnitt abgesetzt hat.

Erfindungsgemäß wird diese Aufgabe durch eine Pulverbeschichtungskabine mit den Merkmalen des Anspruchs 1 gelöst.

Die Erfindung beruht auf der Erkenntnis, daß es keineswegs notwendig ist, während des gesamten Beschichtungsvorgangs permanent Pulver, das sich auf dem Bodenabschnitt abgesetzt hat, in Richtung einer Absaugöffnung zu blasen. Vielmehr genügt es, wenn das Pulver intermittierend, und zwar vorzugsweise in regelmäßigen Zeitabständen, durch die Abblasdüse von dem Bodenabschnitt abgeblasen wird.

Anstatt nun eine Vielzahl von Abblasdüsen vorzusehen, die nur zeitweise Druckluft abgeben, ist erfindungsgemäß wenigstens eine Abblasdüse vorgesehen, die verfahrbar angeordnet ist. Infolge der Verfahrbarkeit kann die Abblasdüse den gesamten Bodenabschnitt oder zumindest einen gröβeren Teil desselben von Pulver befreien. Die Abblaswirkung ist nun jedoch erheblich gleichmäßiger, als dies bei intermittierend angesteuerten feststehenden Abblasdüsen der Fall wäre.

Die Verfahrbewegung erfolgt vorzugsweise kontinuierlich mit konstanter Geschwindigkeit, da auf diese Weise die gleichmäßigste Abblaswirkung erreicht wird. In Einzelfällen kann jedoch auch eine Betriebsweise mit unterschiedlichen Geschwindigkeiten, zwischenzeitlichen Unterbrechungen der Verfahrbewegungen oder auch (kurzzeitigen) Richtungswechseln sinnvoll sein. In Betracht kommen solche ungleichmäßigen Verfahrbewegungen beispielsweise, wenn es im Bereich des Bodenabschnitts nach oben ragende Hindernisse, z.B. Teile von Sprührobotern, gibt, welche ein erneutes oder längeres Abblasen erforderlich machen. Ferner ist es möglich, den Bodenabschnitt mit Hilfe einer Kamera zu erfassen und die Reinigungswirkung durch bildverarbeitende Methoden zu ermitteln. Die Abblasdüse wird dann solange verfahren werden, bis die gewünschte Reinigungswirkung erreicht wird.

Da die Abblasdüse zumindest über einen Teil des möglichen Verfahrweges hinweg aus einem Schlitz herausragt, sind die Zuleitung und der Antrieb für die Abblasdüse auf diese Weise vor herabfallendem Pulver geschützt.

Besonders vorteilhaft rot es, wenn der Schlitz zwischen Boden- und Wandabschnitten unterschiedlicher Neigung gebildet ist. Hier läßt sich ein Schlitz besonders einfach realisieren, da dort ohnehin mehrere Bleche der Innenverkleidung aneinander angrenzen.

Besonders gleichmäßig wird die Abblaswirkung, wenn die Abblasdüse parallel zu dem Bodenabschnitt verfahrbar ist. Im allgemeinen wird der Verfahrweg dann ebenfalls in einer Horizontalen liegen. Bei geneigten Bodenabschnitten kommen aber auch geneigte Verfahrwege in Betracht.

Im Hinblick auf eine optimale Abblaswirkung ist es günstig, wenn der kürzeste Abstand zwischen einer Austrittsöffnung der Abblasdüse und dem Bodenabschnitt kleiner als 5 cm, vorzugsweise kleiner als 2 cm, ist. Ein solch geringer Abstand zwischen der Abblasdüse und dem horizontalen Bodenabschnitt gewährleistet, daß der aus der Abblasdüse austretende Luftstrom möglichst nah über die Oberfläche des Bodenabschnitts geführt wird. Bei höher über dem Bodenabschnitt angeordneten Abblasdüsen hingegen wäre die Abblaswirkung geringer, weil der Luftstrom bereits einen Teil seiner Energie durch Verwirbelungen verloren hat.

Die Wirkung der Abblasdüse kann weiter optimiert werden, dass sie zusätzlich um eine horizontale und/oder vertikale Schwenkachse verschwenkbar ist. Eine Verschwenkung um eine horizontale Schwenkachse ist insbesondere dann günstig, wenn die Abblasdüse nicht unmittelbar über dem Bodenabschnitt angeordnet ist, wie dies vorstehend erläutert wurde. Befindet sich die Abblasdüse weiter von dem Bodenabschnitt entfernt, z.B. in einem Abstand von 20 cm oder 40 cm, so kann der austretende Luftstrom durch eine Schwenkbewegung auf näher an der Abblasdüse oder weiter davon entfernte Bereiche gerichtet werden. Gegebenenfalls kann es in diesem Zusammenhang sinnvoll sein, den Luftstrom zu unterbrechen, solange die Abblasdüse nach unten verschwenkt wird. Dadurch wird verhindert, daß Pulver durch Turbulenzen zur Abblasdüse hin transportiert wird. Ein Verschwenken um eine vertikale Schwenkachse kann beispielsweise günstig sein, um Randbereiche am Ende des Fahrweges besser mit dem aus der Abblasdüse austretenden Luftstrom erreichen zu können.

Bei einer anderen bevorzugten Ausgestaltung der Erfindung ist die Abblasdüse parallel zu einer Transportrichtung zu beschichtender Gegenstände verfahrbar. Dies ist deswegen günstig, weil die Abmessungen der Pulverbeschichtungskabine entlang dieser Richtung in aller Regel wesentlich größer sind als in Querrichtung. Ein horizontaler ebener Boden von kürzeren und nicht zu breiten Pulverbeschichtungskabinen läßt sich dann unter Umständen mit nur einer einzigen Abblasdüse abblasen. Damit die Abblasintervalle nicht zu lang werden, kann es bei längeren Pulverbeschichtungskabinen sinnvoll sein, mehrere verfahrbare Abblasdüsen in Längsrichtung hintereinander anzuordnen.

Bei breiteren Pulverbeschichtungskabinen kann es wegen der begrenzten Reichweite des von den Abblasdüsen erzeugten Luftstroms zweckmäßig sein, mindestens zwei Abblasdüsen vorzusehen, deren Verfahrwege parallel zueinander und zu der Transportrichtung der zu beschichtenden Gegenstände verlaufen. Jede Abblasdüse entfernt dann etwa über die halbe Breite des Bodenabschnitts hinweg das herabgefallene Pulver.

Für die Lage des Verfahrwegs in Querrichtung der Pulverbeschichtungskabine gibt es unterschiedliche Möglichkeiten. So kann der Verfahrweg der Abblasdüse in einem Übergangsbereich zwischen dem Bodenabschnitt und einer vertikalen Seitenwand der Pulverbeschichtungsanlage angeordnet sein. Dies ist insofern vorteilhaft, weil im Bereich der Seitenwand in der Regel mehr Platz für den Verfahrweg ist. Bei besonders schmalen Pulverbeschichtungskabinen genügt dann ein Absaugschlitz auf der gegenüberliegenden Seite, um den Bodenabschnitt von Pulver vollständig reinigen zu können.

Bei breiteren Pulverbeschichtungskabinen wird es in der Regel günstiger sein, auf jeder Längsseite der Pulverbeschichtungskabine mindestens eine verfahrbare Abblasdüse vorzusehen. Das zur Mitte der Pulverbeschichtungskabine geblasene Pulver kann dann über einen dort angeordneten Absaugkanal abgesaugt werden.

Bei einer Variante verläuft der Verfahrweg der Abblasdüse zumindest annähernd in der Mitte zwischen vertikalen Seitenwänden der Pulverbeschichtungskabine. Die Abblasdüse bläst überschüssiges Pulver dann während des Verfahrvorgangs zu einer Seitenwand, von wo aus es über einen Absaugkanal abgesaugt wird. Beim Rückweg kann die Abblasdüse z.B. um 180° gedreht werden. Alternativ kann auch eine Abblasdüse verwendet werden, die in alle Richtungen oder zumindest in zwei gegenüberliegende Richtungen Luft ausströmen läßt. Dadurch wird während eines Verfahrvorgangs Pulver zu beiden Seiten der Pulverbeschichtungskabine geblasen. Selbstverständlich ist es ebenso möglich, die Verfahrwege von zwei Abblasdüsen in der Mitte der Pulverbeschichtungskabine dicht beabstandet nebeneinander anzuordnen. Jede Abblasdüse reinigt dann eine Hälfte des Bodenabschnitts.

Bei besonders breiten Pulverbeschichtungskabine können Verfahrwege für Abblasdüsen sowohl entlang der vertikalen Seitenwände als auch entlang der Mitte angeordnet sein.

Verbessern läßt sich der Schutz noch, wenn der Schlitz durch eine elastische Schlitzleiste abgedeckt ist, die von der Abblasdüse verdräng- oder durchdringbar ist. In Betracht kommen beispielsweise Gummilippen oder Borstenleisten, die ein Eindringen von Pulver in den Zwischenraum zwischen Innenwand und Außenwand der Pulverbeschichtungskabine verhindern.

Der Absaugkanal kann über seine gesamte Länge hinweg von einer Abdeckung derart teilweise überdeckt sein, daß zwischen der Abdeckung und angrenzenden horizontalen Bodenabschnitten Absaugschlitze verbleiben. Eine Abdeckung ist deswegen vorteilhaft, weil auf diese Weise ein Zugang zum Absaugkanal zu Wartungs- und Reinigungsarbeiten geschaffen wird. Die Abdeckung kann beispielsweise abhebbar oder aufklappbar sein.

Verläuft der Absaugkanal mittig unter dem Boden der Pulverbeschichtungskabine, so hat es sich als günstig erwiesen, wenn die Abdeckung eine konvex nach außen gewölbte Außenfläche hat. Bei geeigneter Auslegung wird dadurch erreicht, daß sich in der Mitte der Abdeckung kein Pulver anhäufen kann.

Optimal ist es dabei, wenn eine Scheitellinie der Außenfläche auf gleicher Höhe mit den angrenzenden horizontalen Bodenabschnitten oder bis maximal 10 cm unterhalb der horizontalen Bodenabschnitte verläuft. Die von den Absaugschlitzen erzeugte Saugwirkung kann dann besser bis zur Scheitellinie der Außenfläche heranreichen.

Weitere Merkmale und Vorteile der Erfindung ergeben sich aus der nachfolgenden Beschreibung eines Ausführungsbeispiels anhand der Zeichnungen. Darin zeigen:
- Figur 1: einen Querschnitt durch ein Ausführungsbeispiel einer erfindungsgemäßen Pulverbeschichtungska- bine;
- Figur 2: einen Längsschnitt entlang der Linie II-II durch die in der Figur 1 gezeigte Pulverbe- schichtungskabine;
- Figur 3: einen horizontalen Schnitt entlang der Linie III-III durch die in der Figur 1 gezeigte Pul- verbeschichtungskabine;
- Figur 4: einen vergrößerten Ausschnitt aus der Figur 1.

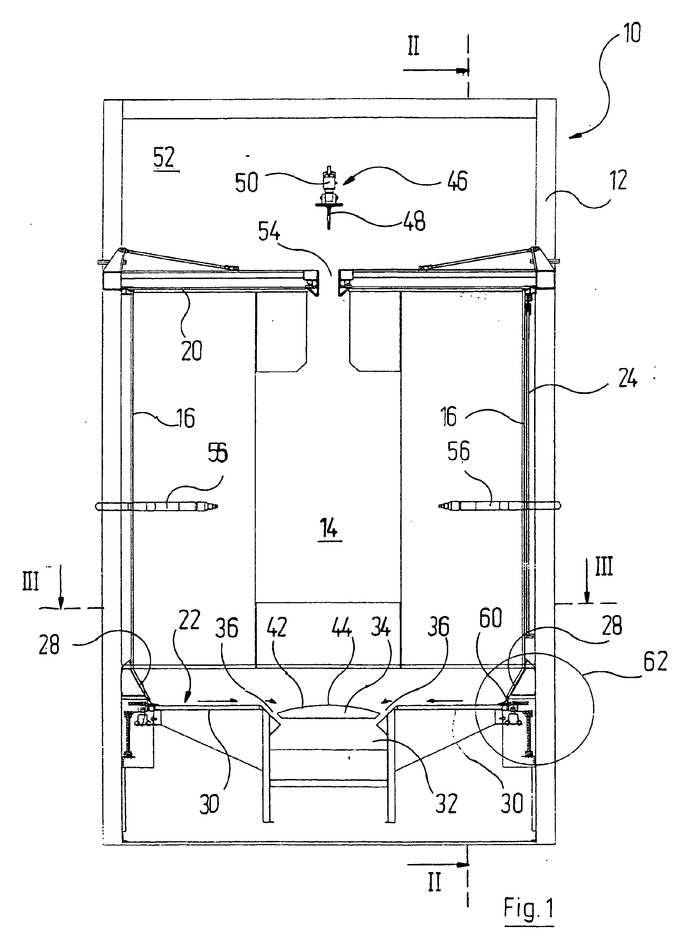

Die Figuren 1, 2 und 3 zeigen ein Ausführungsbeispiel einer Pulverbeschichtungskabine in einem Querschnitt, einem Längsschnitt entlang der Linie II-II bzw. in einem horizontalen Schnitt entlang der Linie III-III.

Die insgesamt mit 10 bezeichnete Pulverbeschichtungskabine weist einen Stahlbau 12 auf, der aus mehreren horizontal und vertikal verlaufenden Stahlträgern zusammengesetzt ist. Der Stahlbau 12 trägt eine Vielzahl von plattenartigen Innenverkleidungselementen, die im vorliegenden Ausführungsbeispiel als Edelstahlbleche ausgebildet sind und einen Innenraum 14 der Pulverbeschichtungskabine 10 umschließen. Die Innenverkleidung wird dabei durch Seitenwände 16, die sich entlang einer Längsrichtung der Pulverbeschichtungskabine 10 erstrecken, durch Stirnwände 18, eine Decke 20 und einen Boden 22 gebildet.

In einer Seitenwand 16 ist eine Schiebetür 24 vorgesehen, um Bedienpersonal einen Zugang zum Innenraum 14 zu ermöglichen. An den Stirnwänden 18 sind ebenfalls Türen vorgesehen, um zu beschichtende Gegenstände in den Innenraum 14 einbringen und nach der Beschichtung wieder aus dem Innenraum 14 ausbringen zu können.

Der Boden 22 umfaßt Rutschbleche 28, die sich unterhalb der Seitenwände 16 anschließen und eine Neigung von etwa 50° bezüglich der Horizontalen aufweisen. Nach innen schließen sich an die beiden Rutschbleche 28 horizontal angeordnete ebene Bodenabschnitte 30 an, zwischen denen sich ein Absaugkanal 32 entlang der Längsrichtung der Pulverbeschichtungskabine 10 erstreckt. Der Absaugkanal 32 ist durch eine Abdeckhaube 34 so weit abgedeckt, daß sich in Längsrichtung der Pulverbeschichtungskabine 10 Absaugschlitze 36, 38 zwischen der Abdeckhaube 34 und den seitlich daran angrenzenden horizontalen Bodenabschnitten 30 bilden. Die Abdeckhaube 34 ist entlang einer Längsseite an einer Seitenwand des Absaugkanals 32 derart angelenkt (nicht dargestellt), daß die Abdeckhaube 34 aufgeklappt werden kann, um einen Zugang zum Absaugkanal 32 zu ermöglichen.

Die Abdeckhaube 34 hat eine konvex gewölbte Außenfläche 42, deren Profil symmetrisch zur Längsrichtung der Abdeckhaube 34 ist. Eine Scheitellinie 44 der gekrümmten Außenfläche 42 befindet sich auf der gleichen Höhe oder knapp unterhalb der horizontalen Bodenabschnitte 30.

Zum Ein- und Ausbringen der Gegenstände in die Pulverbeschichtungskabine 10 ist ein Förderer 46 vorgesehen, der als Einschienenhängebahn ausgebildet ist. Der Förderer 46 weist zu diesem Zweck eine Tragschiene 48 sowie ein bei 50 angedeutetes Laufwerk auf, das auf der Tragschiene 48 abrollt. Der Förderer 46 befindet sich in einem Raum 52 oberhalb der Decke 20 und somit außerhalb des Innenraums 14. Während des Betriebs wird an dem Laufwerk 50 eine Aufhängung befestigt, die den zu beschichtenden Gegenstand trägt und durch einen Deckenspalt 54 in den Innenraum 14 hineinreicht.

An den gegenüberliegenden Seitenwänden 16 befinden sich jeweils zwei Pulversprüheinrichtungen 56, welche in vertikaler Richtung entlang von Führungsschienen 58 verfahrbar sind. Die Pulversprüheinrichtungen 56 sind über nicht dargestellte Schläuche mit einer Pulverversorgungseinrichtung der Pulverbeschichtungsanlage verbunden, zu der die Pulverbeschichtungskabine 10 gehört.

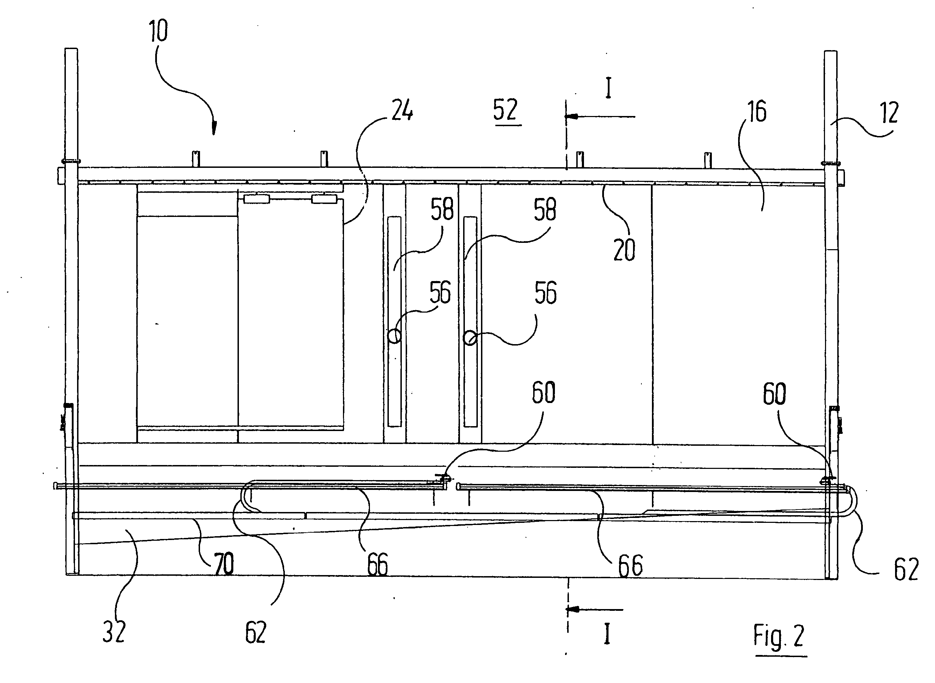

Teil der Pulverbeschichtungsanlage ist ferner ein Absauggebläse (nicht dargestellt), das mit dem Absaugkanal 32 verbunden ist. Der Absaugkanal 32 hat die Aufgabe, während des Beschichtungsvorganges herabgefallenes überschüssiges Pulver aus dem Innenraum 14 abzusaugen und einer Wiederaufbereitungseinrichtung zuzuführen. Der Absaugkanal 32 hat einen rechteckigen Querschnitt, der sich in Längsrichtung der Pulverbeschichtungskabine 10 verjüngt, wie dies am besten in dem Längsschnitt der Figur 2 erkennbar ist.

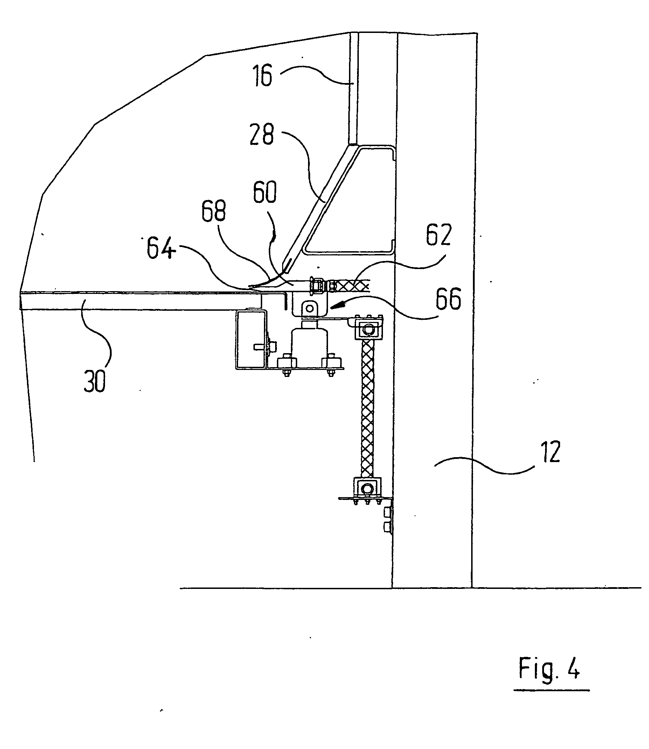

Zwischen den Rutschblechen 28 und den horizontalen Bodenabschnitten 30 sind entlang der Längsrichtung der Pulverbeschichtungskabine 10 verfahrbare Blasdüsen 60 angeordnet, deren Einzelheiten am besten in dem vergrößerten Ausschnitt erkennbar sind, der in der Figur 4 gezeigt ist. Die Blasdüsen 60 sind über Druckluftschläuche 62 mit einer Drucklufteinrichtung verbunden und haben eine Austrittsöffnung 64 für die Druckluft, die etwa 2 cm über dem angrenzenden ebenen Bodenabschnitt 30 angeordnet ist. Zum Verfahren der Blasdüse 60 ist eine Verfahreinrichtung 66 vorgesehen, bei der es sich im dargestellten Ausführungsbeispiel um ein Schienen-/Schlittensystem handelt. Der durch die Verfahreinrichtung 66 festgelegte Fahrweg verläuft jeweils horizontal unterhalb der Rutschbleche 28. Um die Verfahreinrichtung 66 vor herabfallendem Pulver zu schützen, ist der Spalt zwischen den Rutschblechen 28 einerseits und den horizontalen Bodenabschnitten 30 andererseits jeweils durch eine elastische Dichtleiste 68 überdeckt. Beim Verfahren drückt die Blasdüse 60 die Dichtleiste 68 so weit nach oben, daß die Austrittsöffnung 64 freigelegt wird.

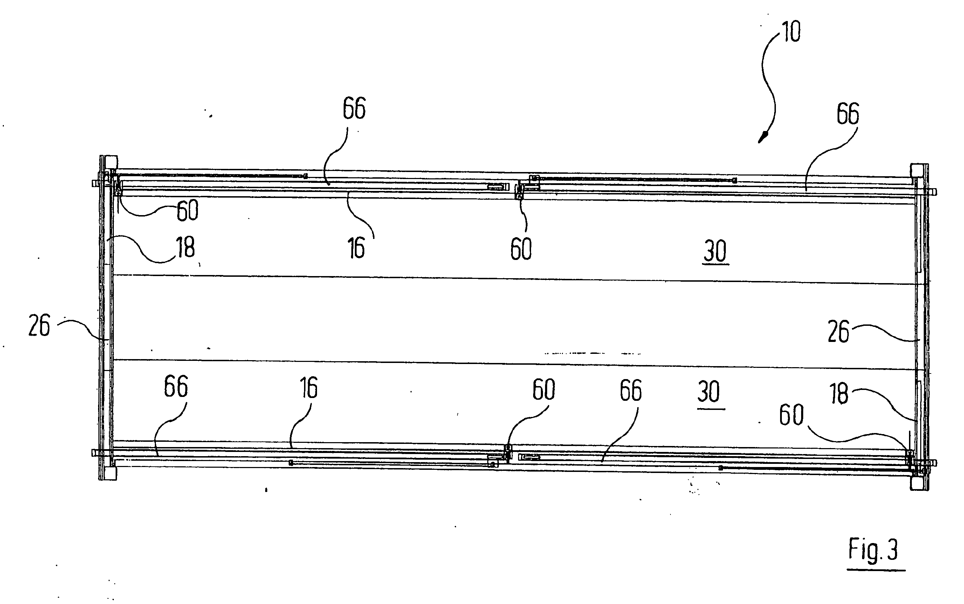

Wie am besten in dem horizontalen Schnitt der Figur 3 erkennbar ist, weist die Pulverbeschichtungskabine 10 insgesamt vier verfahrbare Blasdüsen 60 auf. Auf jeder Längsseite der Pulverbeschichtungskabine 10 sind dabei die Verfahrwege von jeweils zwei Blasdüsen 60 hintereinander auf gleicher Höhe angeordnet. Die Steuerung der Blasdüsen 60 erfolgt vorzugsweise so, daß die Blasdüsen 60 auf einer Seite der Pulverbeschichtungskabine 10 während eines Verfahrvorganges jeweils den gleichen Abstand untereinander haben. Es hat sich außerdem als günstig erwiesen, wenn während eines Verfahrvorgangs die Verfahrrichtung auf den beiden Seiten der Pulverbeschichtungskabine 10 jeweils entgegengesetzt ist.

Um eine ungehinderte Verfahrbarkeit der Blasdüsen 60 zu ermöglichen, sind die Druckluftschläuche 62 als Schleppen ausgeführt, die sich während der Verfahrvorgänge in Rinnen 70 einlegen. Bei selbstfahrenden Verfahrschlitten kann auch deren Stromversorgung und Steuerung über Leitungen erfolgen, die, zusammen mit den Druckluftschläuchen 62, jeweils eine gemeinsame Schleppe bilden.

Die vorstehend beschriebene Pulverbeschichtungskabine 10 funktioniert wie folgt:
Ein zu beschichtender und über die Aufhängung über dem Laufwerk 50 befestigter Gegenstand wird zunächst mit Hilfe des Förderers 46 in den Innenraum 14 eingebracht. Zu diesem Zweck öffnet sich eine der stirnseitigen Türen 26 kurzzeitig, um den Gegenstand in den Innenraum 14 einbringen zu können.

Nun beginnt der eigentliche Beschichtungsvorgang, während dem aus den Pulversprüheinrichtungen 56 Pulver auf den eingebrachten Gegenstand aufgesprüht wird. Da der Gegenstand an eine Potentialquelle angeschlossen ist, bleibt der größte Teil des aufgesprühten und entgegengesetzt geladenen Pulvers an dem Gegenstand haften. Ein kleinerer Teil des Pulvers sinkt jedoch in dem Innenraum nach unten. Der größte Teil des überschüssigen Pulvers wird über die Absaugschlitze 36 abgesaugt und über den Absaugkanal 32 der Wiederaufbereitung zugeführt. Ein weiterer Teil des überschüssigen Pulvers setzt sich zunächst auf den horizontalen Bodenabschnitten 30 ab. Pulver, das auf die geneigten Rutschbleche 28 herabfällt, rutscht an diesen und über die sich daran anschließenden Dichtleisten 68 herab und gelangt somit ebenfalls auf die ebenen Bodenabschnitte 30.

Zur Entfernung des sich auf den horizontalen Bodenabschnitten 30 ablagernden Pulvers werden die verfahrbaren Blasdüsen 60 eingesetzt. Diese werden vorzugsweise während Beschichtungspausen entlang ihrer Verfahrwege durch den Schlitz geführt, der zwischen den geneigten Rutschblechen 28 und den horizontalen Bodenabschnitten 30 verbleibt. Alternativ oder zusätzlich können die Blasdüsen 60 auch während des Beschichtungsvorgangs verfahren werden. Die aus den Austrittsöffnungen 64 austretende Druckluft bläst während des Verfahrvorgangs das Pulver in Richtung des Absaugkanals 32. Die Stärke des Druckluftstroms ist dabei so gewählt, daß das aufgewirbelte Pulver von dem im Absaugkanal 32 herrschenden Unterdruck erfaßt und über die Absaugschlitze 36 abgesaugt werden kann.

Infolge der konvexen Wölbung der Außenfläche 42 setzt sich kein Pulver auf der Abdeckhaube 34 ab. Die zu den Längsrändern hin abfallende Außenfläche 42 bewirkt nämlich, daß die von den Absaugschlitzen 36 erzeugte Saugwirkung bis zur Scheitellinie 44 der Abdeckhaube 34 reicht.

Die Verfahrgeschwindigkeit der Blasdüsen 60 ist so an die Breite der horizontalen Bodenabschnitte 30, die Haftverhältnisse zwischen Pulver und den Bodenabschnitten 30 und der Saugleistung der Blasdüsen 60 angepaßt, daß nach Durchgang der Blasdüse 60 die horizontalen Bodenabschnitte 30 praktisch vollständig von herabgefallenem Pulver befreit sind. Bei der Wahl der Länge der Verfahrwege ist zu berücksichtigen, daß zwischen zwei Durchgängen der Blasdüse 60 nicht zu viel Zeit verstreichen sollte, damit die abgesetzte Pulvermenge noch weitgehend vollständig von der Blasdüse 60 entfernt werden kann.

## Patentansprüche

1. Pulverbeschichtungskabine (10) für eine Pulverbeschichtungsanlage, mit einem horizontal oder geneigt angeordneten ebenen Bodenabschnitt (30) und einer Abblasdüse (60) zum Abblasen von Pulver, das sich auf dem Bodenabschnitt (30) abgesetzt hat, wobei die Abblasdüse (60) verfahrbar angeordnet ist und zumindest über einen Teil des möglichen Verfahrweges hinweg aus einem Schlitz herausragt **dadurch gekennzeichnet, daß** des Schlitz zwischen Boden und Wandabchnitten (28, 30) unterschiedlicher Neigung gebildet wird.

2. Pulverbeschichtungskabine (10) nach Anspruch 1, **dadurch gekennzeichnet, daß** die Abblasdüse (60) parallel zu dem Bodenabschnitt (30) verfahrbar ist.

3. Pulverbeschichtungskabine (10) nach Anspruch 1 oder 2, **dadurch gekennzeichnet, daß** der kürzeste Abstand zwischen einer Austrittsöffnung (64) der Abblasdüse (60) und dem Bodenabschnitt (30) kleiner als 5 cm, vorzugsweise kleiner als 2 cm, ist.

4. Pulverbeschichtungskabine (10) nach einem der vorhergehenden Ansprüche, **dadurch gekennzeichnet, daß** die Abblasdüse (60) zusätzlich um eine horizontale und/oder vertikale Schwenkachse verschwenkbar ist.

5. Pulverbeschichtungskabine (10) nach einem der vorhergehenden Ansprüche, **dadurch gekennzeichnet, daß** die Abblasdüse (60) parallel zu einer Transportrichtung zu beschichtender Gegenstände verfahrbar ist.

6. Pulverbeschichtungskabine (10) nach Anspruch 5, nach einem der vorhergehenden Ansprüche, **dadurch gekennzeichnet, daß** mindestens zwei Abblasdüsen (60) vorhanden sind, deren Verfahrwege parallel zueinander verlaufen.

7. Pulverbeschichtungskabine (10) nach einem der vorhergehenden Ansprüche, **dadurch gekennzeichnet, daß** der Verfahrweg der Abblasdüse (60) in einem Übergangsbereich zwischen dem Bodenabschnitt (30) und einer vertikalen Seitenwand (16) der Pulverbeschichtungskabine (10) angeordnet ist.

8. Pulverbeschichtungskabine (10) nach einem der vorhergehenden Ansprüche, **dadurch gekennzeichnet, daß** auf jeder Längsseite der Pulverbeschichtungskabine (10) mindestens eine Abblasdüse (60) verfahrbar angeordnet ist.

9. Pulverbeschichtungskabine (10) nach einem der vorhergehenden Ansprüche, **dadurch gekennzeichnet, daß** der Verfahrweg der Abblasdüse (60) zumindest annähernd in der Mitte zwischen vertikalen Seitenwänden (16) der Pulverbeschichtungskabine (10) verläuft.

10. Pulverbeschichtungskabine (10) nach einen des vorhergehenden Ansprüche, **dadurch gekennzeichnet, daß** der Schlitz durch eine elastische Dichtleiste (68) abgedeckt ist, die von der Abblasdüse (60) verdräng- oder durchdringbar ist.

11. Pulverbeschichtungskabine (10) nach einem der vorhergehenden Ansprüche, **dadurch gekennzeichnet, daß** der Bodenabschnitt (30) an einen Absaugkanal (32) zum Absaugen von Pulver angrenzt, und daß der Absaugkanal (32) derart relativ zu einem Verfahrweg der Abblasdüse (60) angeordnet ist, daß die Abblasdüse (60) Pulver, das auf den Bodenabschnitt (30) herabgefallen ist, in Richtung des Absaugkanals (32) blasen kann.

12. Pulverbeschichtungskabine (10) nach Ansprüch 11, **dadurch gekennzeichnet, daß** der Absaugkanal (32) über seine gesamte Länge hinweg von einer Abdeckung (34) derart teilweise überdeckt ist, daß zwischen der Abdeckung (34) und angrenzenden horizontalen Bodenabschnitten (30) Absaugschlitze (36) verbleiben.

13. Pulverbeschichtungskabine (10) nach Anspruch 12, **dadurch gekennzeichnet, daß** die Abdeckung (34) aufklappbar befestigt ist.

14. Pulverbeschichtungskabine (10) nach Anspruch 12 oder 13, **dadurch gekennzeichnet, daß** die Abdeckung (34) eine konvex nach außen gewölbte Außenfläche (42) hat.

15. Plverbeschichtungskabine (10) nach Anspruch 14, **dadurch gekennzeichnet, daß** eine Scheitellinie (44) der Außenfläche (42) auf gleicher Höhe mit den horizontalen Bodenabschnitten (30) oder bis maximal 10 cm unterhalb der horizontalen Bodenabschnitte (30) verläuft.

## Claims

1. Powder coating cabin (10) for a powder coating installation, comprising a flat floor section (30) arranged horizontally or inclined and a blow-off nozzle (60) for blowing off powder that has settled on the floor section (30), wherein the blow-off nozzle (60) is movably arranged and projects out from a slit at least over a part of the possible movement path,
**characterised in that**
the slit is formed between floor and wall sections (28, 30) of different inclinations.

2. Powder coating cabin (10) according to claim 1, **characterised in that** the blow-off nozzle (60) is movable parallel to the floor section (30).

3. Powder coating cabin (10) according to claim 1 or 2, **characterised in that** the shortest distance between an outlet opening (64) of the blow-off nozzle (60) and the floor section (30) is less than 5 cm, preferably less than 2 cm.

4. Powder coating cabin (10) according to one of the preceding claims, **characterised in that** the blow-off nozzle (60) can in addition swivel about a horizontal and/or vertical pivotal axis.

5. Powder coating cabin (10) according to one of the preceding claims, **characterised in that** the blow-off nozzle (60) is movable parallel to a transporting direction towards objects to be coated.

6. Powder coating cabin (10) according to claim 5, according to one of the preceding claims, **characterised in that** at least two blow-off nozzles (60) are present, whose movement paths run parallel to one another.

7. Powder coating cabin (10) according to one of the preceding claims, **characterised in that** the movement path of the blow-off nozzle (60) is arranged in a transition region between the floor section (30) and a vertical side wall (16) of the Powder coating cabin (10).

8. Powder coating cabin (10) according to one of the preceding claims, **characterised in that** at least one blow-off nozzle (60) is movably arranged on each longitudinal side of the powder coating cabin (10).

9. Powder coating cabin (10) according to one of the preceding claims, **characterised in that** the movement path of the blow-off nozzle (60) runs at least approximately in the middle between vertical side walls (16) of the powder coating cabin (10).

10. Powder coating cabin (10) according to any of the preceding claims, **characterised in that** the slit is covered by an elastic sealing strip (68), which can be displaced or penetrated by the blow-off nozzle (60).

11. Powder coating cabin (10) according to one of the preceding claims, **characterised in that** the floor section (30) adjoins a suction channel (32) for aspirating powder, and that the suction channel (32) is arranged relative to a movement path of the blow-off nozzle (60) in such a way that the said blow-off nozzle (60) can blow powder, which has fallen onto the floor section (30), in the direction of the suction channel (32).

12. Powder coating cabin (10) according to claim 11, **characterised in that** the suction channel (32) is to some extent covered over its whole length by a covering (34) in such a way that suction slits (36) remain between the covering (34) and adjoining horizontal floor sections (30).

13. Powder coating cabin (10) according to claim 12, **characterised in that** the covering (34) is secured in a tiltable manner.

14. Powder coating cabin (10) according to claim 12 or 13, **characterised in that** the covering (34) has a convexly outwardly curved outer surface (42).

15. Powder coating cabin (10) according to claim 14, **characterised in that** a ridge line (44) of the outer surface (42) runs at the same height as the horizontal floor sections (30) or at most 10 cm underneath the horizontal floor sections (30).

## Revendications

1. Cabine de revêtement par poudre (10) pour une installation de revêtement par poudre, avec une partie de fond plane (30) disposée horizontalement ou en inclinaison, et avec une buse de soufflage (60) pour évacuer par soufflage la poudre qui s'est déposée sur la partie de fond (30), sachant que la buse de soufflage (60) est disposée à déplacement et dépasse d'une fente au moins sur une partie du parcours de déplacement possible, **caractérisée en ce que** la fente est formée entre le fond et des parties de paroi (28, 30) d'inclinaisons différentes.

2. Cabine de revêtement par poudre (10) selon la revendication 1, **caractérisée en ce que** la buse de soufflage (60) peut être déplacée parallèlement à la partie de fond (30).

3. Cabine de revêtement par poudre (10) selon la revendication 1 ou 2, **caractérisée en ce que** la plus courte distance entre une ouverture de sortie (64) de la buse de soufflage (60) et la partie de fond (30) est inférieure à 5 cm, de préférence est inférieure à 2 cm.

4. Cabine de revêtement par poudre (10) selon l'une des revendications précédentes, **caractérisée en ce que** la buse de soufflage (60) peut en outre être pivotée autour d'un axe de pivotement horizontal et/ou vertical.

5. Cabine de revêtement par poudre (10) selon l'une des revendications précédentes, **caractérisée en ce que** la buse de soufflage (60) peut être déplacée parallèlement à une direction de transport d'objets à revêtir.

6. Cabine de revêtement par poudre (10) selon la revendication 5, **caractérisée en ce qu'**au moins deux buses de soufflage (60) sont présentes, dont les parcours de déplacement s'étendent parallèlement entre eux.

7. Cabine de revêtement par poudre (10) selon l'une des revendications précédentes, **caractérisée en ce que** le parcours de déplacement de la buse de soufflage (60) est disposé dans une région de transition entre la partie de fond (30) et une paroi latérale verticale (16) de la cabine de revêtement par poudre (10).

8. Cabine de revêtement par poudre (10) selon l'une des revendications précédentes, **caractérisée en ce qu'**au moins une buse de soufflage (60) est disposée à déplacement sur chaque côté longitudinal de la cabine de revêtement par poudre (10).

9. Cabine de revêtement par poudre (10) selon l'une des revendications précédentes, **caractérisée en ce que** le parcours de déplacement de la buse de soufflage (60) s'étend au moins approximativement au milieu entre les parois latérales verticales (16) de la cabine de revêtement par poudre (10).

10. Cabine de revêtement par poudre (10) selon l'une des revendications précédentes, **caractérisée en ce que** la fente est recouverte par une patte d'étanchéité élastique (68) qui peut être repoussée ou traversée par la buse de soufflage (60).

11. Cabine de revêtement par poudre (10) selon l'une des revendications précédentes, **caractérisée en ce que** la partie de fond (30) est adjacente d'un canal d'aspiration (32) pour l'évacuation de poudre par aspiration, et **en ce que** le canal d'aspiration (32) est disposé par rapport à un parcours de déplacement de la buse de soufflage (60) de telle sorte que la buse de soufflage (60) peut souffler en direction du canal d'aspiration (32) la poudre qui est tombée sur la partie de fond (30).

12. Cabine de revêtement par poudre (10) selon la revendication 11, **caractérisée en ce que** le canal d'aspiration (32) est, sur toute sa longueur, recouvert par un élément de recouvrement (34) partiellement de telle sorte que des fentes d'aspiration (36) restent présentes entre l'élément de recouvrement (34) et les parties de fond horizontales adjacentes (30).

13. Cabine de revêtement par poudre (10) selon la revendication 12, **caractérisée en ce que** l'élément de recouvrement (34) est fixé de manière relevable.

14. Cabine de revêtement par poudre (10) selon la revendication 12 ou 13, **caractérisée en ce que** l'élément de recouvrement (34) possède une surface extérieure (42) à courbure convexe vers l'extérieur.

15. Cabine de revêtement par poudre (10) selon la revendication 14, **caractérisée en ce qu'**une ligne de sommet (44) de la surface extérieure (42) s'étend à la même hauteur que les parties de fond horizontales (30) ou jusqu'à au plus 10 cm en dessous des parties de fond horizontales adjacentes (30).
